# EUROPÄISCHE PATENTSCHRIFT

(11) **EP 1 483 526 B1**
(45) Veröffentlichungstag und Bekanntmachung des Hinweises auf die Patenterteilung: **25.10.2006**
(21) Anmeldenummer: 03711921.1
(22) Anmeldetag: 05.03.2003
(51) Int. Cl.: F16L 37/44

(54) **FLUGGERÄT MIT EINER MEHRZAHL VON HUB- UND SCHUBROTOREN**
AIRCRAFT WITH A PLURALITY OF LIFT AND THRUST ROTORS
AERONEF COMPORTANT UNE PLURALITE DE ROTORS DE SUSTANTATION ET DE POUSSEE

(30) Priorität: 06.03.2002 DE 10209881
(43) Veröffentlichungstag der Anmeldung: 08.12.2004
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2003/002210
(87) Internationale Veröffentlichungsnummer: WO 2003/074924

(56) Entgegenhaltungen:
- EP-A- 0 049 964
- DE-A- 2 234 524
- DE-A- 19 745 492
- DE-C1- 10 045 446
- FR-A- 656 331
- FR-A- 2 651 139
- GB-A- 509 848
- GB-A- 863 685
- GB-A- 897 756
- US-A- 1 523 926
- US-A- 3 002 712
- US-A- 3 366 347
- US-A- 3 685 608
- US-A- 3 895 276
- US-A- 4 161 843
- US-A- 4 799 629
- US-A- 4 981 456
- US-A- 5 082 079
- US-B1- 6 260 796

## Beschreibung

Zum Errichten hoher Bauwerke ist regelmäßig ein Kran erforderlich. Dies gilt natürlich auch für turmartige Bauwerke wie Windenergieanlagen. Allerdings werden die Windenergieanlagen zunehmend größer und damit müssen die Kräne einerseits immer größere Höhen erreichen und andererseits immer größere Massen bewegen. Dies führt wiederum zu größeren und schwereren Kränen. Solche Kräne sind dann wiederum immer teurer und der Aufwand zum Transport eines solchen Kranes von einer Baustelle zu einer anderen steigt ebenfalls, wie auch der Aufwand zur Montage bzw. Demontage des Kranes.

Eine Alternative ist ein Fluggerät, das in der Lage ist, die Komponenten des Bauwerks wie z. B. einer Windenergieanlage zu transportieren.

Aus der DE 22 34 524 ist eine fliegende Plattform bekannt mit einer Mehrzahl von Hub- und Schubrotoren, mit einem Elektromotor für jeden Rotor und mit einem Wechselrichter für jeden Motor.

Bei diesem bekannten Fluggerät ist es jedoch nachteilig, dass die Elektromotoren an einer gemeinsamen Plattform angebracht sind. Diese Plattform hat einerseits ein hohes Eigengewicht und gibt durch die Konstruktion die mögliche Anzahl von Motoren bzw. Rotoren vor.

Aus der DE 197 45 492 A1 ist ein senkrechtstartendes Flugzeug mit mehreren Hub- und Schubmotoren bekannt, das dem Oberbegriff des Anspruchs 1 entspricht. Die US 3 336 347 zeigt eine aerodynamische Hebevorrichtung, mit drei Beinen und zwei Propellerpaaren. Der GB 863 685 ist ein Transporthubschrauber mit einem Haken zum Transportieren unter dem Hubschrauber hängender Lasten zu entnehmen.

Aufgabe der vorliegenden Erfindung ist es daher, ein Fluggerät mit einer höheren Nutzlast anzugeben.

Die Aufgabe wird bei einem erfindungsgemäßen Fluggerät mit dem Merkmal nach Anspruch 1 gelöst. Dabei liegt der Erfindung die Erkenntnis zu Grunde, dass zwar eine stabile Verbindung zwischen den einzelnen Motoren erforderlich ist, jedoch das Eigengewicht der Plattform bei Verwendung einer Stabkonstruktion eingespart werden kann. Dieses eingesparte Gewicht steht dann bei gleicher Tragfähigkeit des Fluggerätes als zusätzliche Nutzlast zur Verfügung.

Bei der erfindungsgemäßen Ausführungsform erfolgt die Stromversorgung über wenigstens ein Schleppkabel, Auf diese Weise muss das Fluggerät zwar das Gewicht des Kabels mit anheben, braucht dafür aber keine teuren und schweren Energiespeicher zu tragen. Durch eine Stromversorgung aber mehrere Schleppkabel, die bevorzugt an verschiedenen Steilen des Fluggerätes angebracht sind, ist auch bei Ausfall eines Kabels ein sicherer Betrieb weiter möglich,

Besonders bevorzugt wird das Fluggerät vom Boden aus über eine drahtlose oder drahtgebundene Fernsteuerung gesteuert. Dabei können auch zwei oder mehr Fernsteuerungen vorgesehen sein, die abwechselnd auf das Fluggerät einwirken. Auf diese Weise kann eine Grob-Positionierung wie das Anheben der Last und eine grundsätzlich Bestimmung der Flugrichtung vom Boden aus vorgenommen werden, während die Fein-Positionierung z. B. einer Turmsektion vom Turm aus in einer Position vorgenommen wird, von der aus der Vorgang präzise Überwacht werden kann.

In einer bevorzugten Weiterbildung der Erfindung verfügt das Fluggerät Ober Landefüße, mit denen es auf dem Boden abgestellt werden kann, Dazu ist eine federnd gelagerte Stützplatte an der von der Welle abgewandten Stirnseite jedes Rotors vorgesehen.

Besonders bevorzugt weist das erfindungsgemäße Fluggerät eine Vorrichtung zur automatischen Steuerung von Fluglage bzw. Flughöhe auf. Diese kann auch mit einem GPS-System gekoppelt sein, um so eine automatische Ansteuerung einer vorgebbaren Position zu verwirklichen. Damit kann eine Grobpositionierung des erfindungsgemäßen Fluggerätes automatisch vorgenommen werden.

Um auch mit dem Einbau dieser Vorrichtung das Eigengewicht des Fluggerätes möglichst wenig zu erhöhen, ist diese Vorrichtung bevorzugt mit Verbindungsstäben zwischen wenigstens zwei Motoren angeordnet. Besonders bevorzugt ist die Vorrichtung dabei unterhalb der Ebene angeordnet, in welcher die Stäbe zwischen den Motoren verlaufen. Auf diese Weise ergibt sich auch bei einem Flug ohne eine Last ein tiefer Schwerpunkt, der zur Stabilität der Fluglage beiträgt.

In einer bevorzugten Ausführungsform sind Motor und Wechselrichter baulich vereinigt, so dass diese vormontiert und als eine Einheit gehandhabt werden können.

Um die elektrischen Kabel zu schützen, die bei dem Fluggerät erforderlich sind, sind die Verbindungsstäbe besonders bevorzugt hohl ausgebildet und die Kabel verlaufen im Inneren der Stäbe.

Damit das Fluggerät möglichst flexibel und abhängig von den zu transportierenden Lasten dimensionierbar ist, sind feste aber lösbare Verbindungen zwischen den Verbindungsstäben und den Motoren vorgesehen. Dadurch ist eine Skalierung des erfindungsgemäßen Fluggerätes möglich, indem abhängig von der zu transportierenden Last eine gewünschte Anzahl von Motoren ausgewählt wird, die dann durch die Verbindungsstäbe nach Art eines Fachwerks in geeigneter Weise zu einem stabilen Fluggerät verbunden werden.

Vorteilhafte Ausführungsformen der Erfindung sind in den Unteransprüchen angegeben.

Im Folgenden wird ein Ausführungsbeispiel der Erfindung anhand der Figuren näher erläutert. Dabei zeigen:
- Figur 1: eine vereinfachte Darstellung eines erfindungsgemäßen Fluggerätes;
- Figur 2: eine vereinfachte Darstellung eines erfindungsgemäßen Motors des Fluggerätes; und
- Figur 3: einen Endabschnitt eines erfindungsgemäßen Verbindungsstabes.

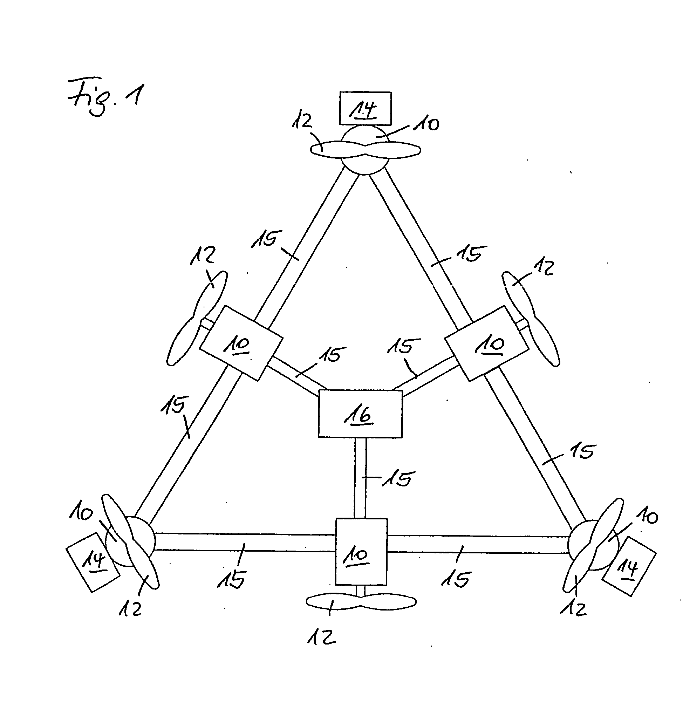

In Figur 1 bezeichnet das Bezugszeichen 10 einen Motor, 12 bezeichnet den Rotor (Propeller), 14 bezeichnet den Wechselrichter, 15 ist ein Verbindungsstab, 16 eine Vorrichtung zur Steuerung der Fluglage bzw. Flughöhe (Steuerungsvorrichtung).

Das erfindungsgemäße Fluggerät ist hier in einer dreieckigen Grundform dargestellt.

Ein Teil der Motoren 10 ist so angeordnet, dass sich der Rotor 12 in einer vertikalen Ebene dreht. Je nach Drehrichtung des Motors 10 wirkt ein solcher Rotor 12 als Schubrotor oder Zugrotor. Mit diesen Rotoren wird demnach die Flugrichtung beeinflusst.

An den Endpunkten der Dreiecks-Form sind weitere Motoren 10 angeordnet, deren Rotoren 12 in einer im Wesentlichen horizontalen Ebene drehen. Diese arbeiten als Hubrotoren und erlauben das Anheben der Last bzw. das Fliegen in einer vorgebbaren Höhe.

Jedem Motor 10 ist ein Wechselrichter 14 zugeordnet, der eine Einzelansteuerung jedes Motors 10 erlaubt. Dadurch sind voneinander unabhängige Ansteuerungen der einzelnen Motoren 10 möglich und damit ist einerseits eine sehr präzise und andererseits richtungsunabhängige Steuerung des Fluggerätes möglich.

In dieser Figur ist die Dreiecksform nur als eine Variante dargestellt. Natürlich sind auch andere Polygone wie Vierecke, Fünfecke oder beliebige andere Formen mit einer entsprechenden Anordnung von Motoren möglich; um entsprechend große Lasten heben und transportieren zu können.

Im Zentrum des Fluggerätes ist eine Steuerungsvorrichtung 16 vorgesehen, die einerseits den Wechselrichtern 14 und damit den Motoren 10 elektrische Energie zuführt und andererseits auch die Wechselrichter 14 beeinflusst, um ein Flugverhalten entsprechend den Steuerungsbefehlen zu bewirken. In diese Steuerungsvorrichtung 16 kann auch ein Energiespeicher integriert sein, der z. B. im Falle eines Bruches des Schleppkabels noch ausreichend Energie für eine Notlandung des Fluggerätes bereitstellt, um einen unkontrollierten Absturz zu vermeiden.

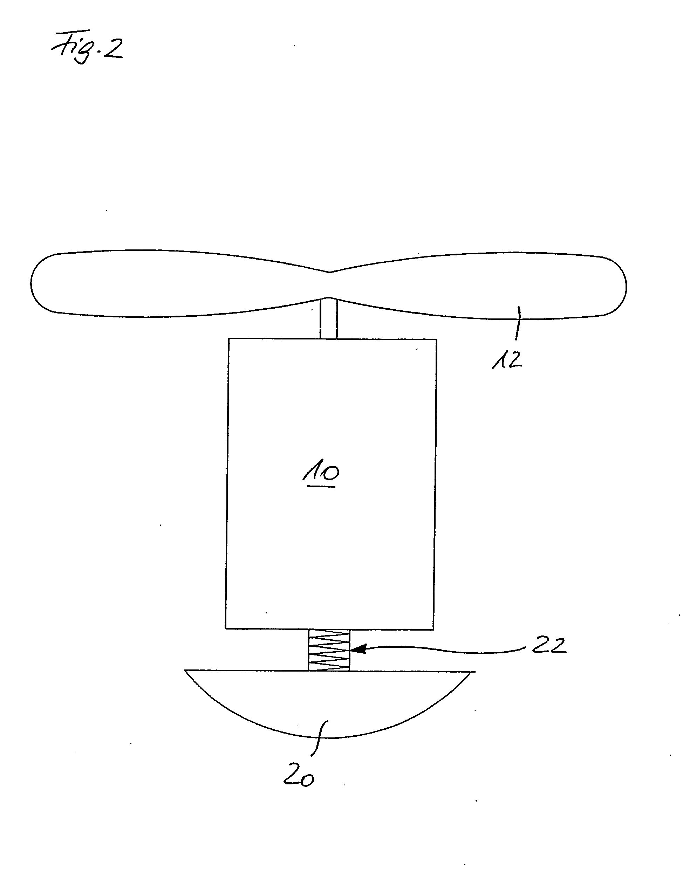

Figur 2 zeigt eine Seitenansicht eines erfindungsgemäßen Motors 10. Mit diesem Motor 10 ist ein Rotor 12 über eine Welle verbunden. An der der Welle gegenüberliegenden Stirnseite des Motors 10 ist ein Federbein 22 vorgesehen, an dessen motorabgewandter Seite ein Stützfuß 20 angebracht ist. Nach der in dieser Figur dargestellten Einbaulage handelt es sich hier um einen Hubmotor. Beim Absenken des erfindungsgemäßen Fluggerätes wird also der Stützfuß 20 zuerst den Boden berühren und der verbleibende Teil des Fluggerätes wird sich gegen den Druck des Federbeins 22 absenken. Dadurch kann das erfindungsgemäße Fluggerät auf dem Boden landen, ohne das Gehäuse des Motors 10 der Gefahr einer Beschädigung oder auch nur einer groben Verschmutzung auszusetzen.

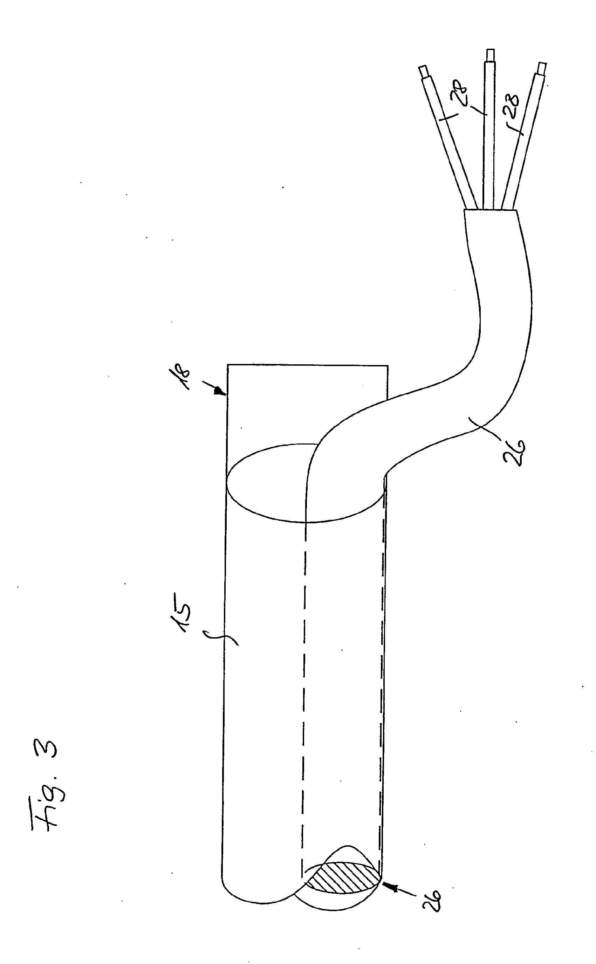

Figur 3 zeigt einen Abschnitt eines erfindungsgemäßen Verbindungsstabes 15. Dieser Verbindungsstab 15 weist einen Halter 18 auf, mit dem er fest aber lösbar z. B. mit einem Motor 10 verbunden werden kann, um ein erfindungsgemäßes Fluggerät aufbauen zu können. Innerhalb des Verbindungsstabes 15, der hohl ausgeführt ist, ist ein Kabel 26 dargestellt. Durch diese Anordnung des Kabels 26 in dem Verbindungsstab 15 ist das Kabel geschützt in diesem Verbindungsstab 15 geführt und damit wird die gerade im rauen Baustellenbetrieb permanent vorhandene Gefahr der Beschädigung des Kabels 26 drastisch verringert.

Das Kabel 26 tritt am Ende des Verbindungsstabes 15 und damit nahe am Motor 10 aus diesem Stab aus und kann mit den Adern 28 angeschlossen werden. Dadurch ist nur der kurze Abschnitt des Kabels 26 zwischen dem Ende des Verbindungsstabes 15 und dem Motor 10 frei zugänglich. Hier kann die Gefahr einer Beschädigung durch eine geeignete Führung des Kabels 26 innerhalb des von dem Fluggerät gebildeten Rahmens verringert werden. Natürlich kann dieses Kabel auch an den Wechselrichter 14 angeschlossen werden, der mit dem Motor 10 eine bauliche Einheit bildet.

Eine solche Kabelführung ist aber auch dann vorteilhaft, wenn der bzw. die Wechselrichter 14 der Steuerungsvorrichtung 16 zugeordnet sind. Dann verlaufen diese Kabel 26 von der Steuerungsvorrichtung 16 mit den Wechselrichtern 14 zu den Motoren 10.

Bei dem beschriebenen Fluggerät ist bevorzugt die Anzahl der Hubrotoren deutlich größer als die Anzahl der Schubrotoren. Beispielsweise kann das Verhältnis der Zahl der Hubrotoren zu den Schubrotoren im Bereich von 5:1 bis 10:1 liegen.

## Patentansprüche

1. Fluggerät zum Heben und Senken von Lasten, mit einer Mehrzahl von Hub- und Schubrotoren (12),
wobei jedem Rotor ein Elektromotor (10) zugeordnet ist und jeder Motor mit einem Wechselrichter (14) verbunden ist, wobei das Fluggerät eine elektrisch, motorisch betriebene Seilwinde aufweist, mittels der vom Fluggerät getragene Lasten heb-oder senkbar sind, wobei die Stromversorgung über wenigstens ein Schleppkabel erfolgt.

2. Fluggerät nach einem der vorstehenden Ansprüche,
**gekennzeichnet durch** eine drahtlose oder drahtgebundene Fernsteuerung.

3. Fluggerät nach Anspruch 2,
**gekennzeichnet durch** zwei Fernsteuerungen, die abwechselnd oder gleichzeitig auf das Fluggerät einwirken.

4. Fluggerät nach einem der vorstehenden Ansprüche,
**gekennzeichnet durch** eine federnd gelagerte Stützplatte (20) an der von der Welle abgewandten Stirnseite jedes Motors (10),

5. Fluggerät nach einem der vorstehenden Ansprüche,
**gekennzeichnet durch** eine Vorrichtung (16) zur automatischen Steuerung von Fluglage bzw. Flughöhe.

6. Fluggerät nach Anspruch 4,
**gekennzeichnet durch** Verbindungsstabe (15) zwischen wenigstens zwei Motoren (10) und der Vorrichtung (16) zur automatischen Steuerung von Fluglage bzw. Flughöhe.

7. Fluggerät nach Anspruch 5 oder 6,
**gekennzeichnet durch** einen GPS-System zum Ansteuern einer vorgebbaren Position.

8. Fluggerät nach einem der Ansprüche 5 bis 7,
**dadurch gekennzeichnet, dass** die Vorrichtung (16) unterhalb der Ebene angeordnet ist, in welcher die Verbindungsstäbe (15) zwischen den Motoren (10) verlaufen.

9. Fluggerät nach einem der vorstehenden Ansprüche,
**gekennzeichnet durch** eine bauliche Vereinigung von Motor (10) und Wechselrichter (14).

10. Fluggerät nach einem der vorstehenden Ansprüche,
**dadurch gekennzeichnet, dass** die Verbindungsstäbe (15) hohl ausgebildet und Kabel (26) im Inneren der Stäbe angeordnet sind.

11. Fluggerät nach einem der vorstehenden Ansprüche,
**gekennzeichnet durch** feste aber lösbare Verbindungen zwischen den Verbindungsstäben (15) und den Motoren (10).

12. Fluggerät nach einem der vorstehenden Ansprüche,
**gekennzeichnet durch** einen am Fluggerät angeordneten Energiespeicher.

13. Fluggerät nach einem der vorstehenden Ansprüche,
**dadurch gekennzeichnet, dass** das Fluggerät ein im Wesentlichen aus Verbindungsstäben aufgebautes Chassis aufweist.

14. Fluggerät nach einem der vorstehenden Ansprüche,
**dadurch gekennzeichnet, dass** die Elektromotoren durch Verbindungsstäbe miteinander verbunden sind.

15. Fluggerät nach einem der vorstehenden Ansprüche,
**dadurch gekennzeichnet, dass** die Hubrotoren im Wesentlichen Einblatt- oder Zweiblattrotoren sind.

## Claims

1. Aircraft for lifting and lowering loads, having a plurality of lifting and thrusting rotors (12),
wherein each rotor is assigned an electric motor (10) and each motor is connected to an inverter (14), wherein the aircraft has an electrically motor-operated cable winch by means of which loads carried by the aircraft may be lifted or lowered, wherein electric power is supplied via at least one trailing cable.

2. Aircraft according to one of the preceding claims,
**characterised by** a wireless or wired remote control.

3. Aircraft according to claim 2,
**characterised by** two remote controls which act on the aircraft alternately or simultaneously.

4. Aircraft according to any one of the preceding claims,
**characterised by** a resiliently mounted support plate (20) at that end of each motor (10) which is remote from the shaft.

5. Aircraft according to any one of the preceding claims,
**characterised by** a device (16) for automatic control of flight attitude and flight height.

6. Aircraft according to claim 4,
**characterised by** connecting bars (15) between at least two motors (10) and the device (16) for automatic control of flight attitude and flight height.

7. Aircraft according to claim 5 or 6,
**characterised by** a GPS system for piloting to a predefinable position.

8. Aircraft according to any one of claims 5 to 7,
**characterised in that** the device (16) is disposed beneath the plane in which the connecting bars (15) extend between the motors (10).

9. Aircraft according to any one of the preceding claims,
**characterised by** a structural combination of motor (10) and inverter (14).

10. Aircraft according to any one of the preceding claims,
**characterised in that** the connecting bars (15) are hollow and cables (26) are disposed in the interior of the bars.

11. Aircraft according to any one of the preceding claims,
**characterised by** fixed but separable connections between the connecting bars (15) and the motors (10).

12. Aircraft according to any one of the preceding claims,
**characterised by** an energy store disposed on the aircraft.

13. Aircraft according to any one of the preceding claims,
**characterised in that** the aircraft has a chassis constructed substantially from connecting bars.

14. Aircraft according to any one of the preceding claims,
**characterised in that** the electric motors are connected to one another by connecting bars.

15. Aircraft according to any one of the preceding claims,
**characterised in that** the lifting rotors are substantially single-blade or double-blade rotors.

## Revendications

1. Aéronef pour soulever et pour abaisser des charges avec une pluralité de rotors de sustentation et de poussée (12),
un moteur électrique (10) étant associé à chaque rotor et chaque moteur étant relié à un onduleur (14), l'aéronef comprenant un treuil entraîné par un moteur électrique au moyen duquel les charges portées par l'aéronef peuvent être soulevées ou abaissées, l'alimentation en courant ayant lieu par l'intermédiaire d'au moins un câble souple.

2. Aéronef selon l'une quelconque des revendications précédentes, **caractérisé par** une télécommande sans fil ou filaire.

3. Aéronef selon la revendication 2, **caractérisé par** deux télécommandes qui agissent alternativement ou simultanément sur l'aéronef.

4. Aéronef selon l'une quelconque des revendications précédentes, **caractérisé par** une plaque de support logée de manière souple (20) et se trouvant sur le côté frontal opposé à l'arbre de chaque moteur (10).

5. Aéronef selon l'une quelconque des revendications précédentes, **caractérisé par** un dispositif (16) pour la commande automatique de l'assiette ou de la hauteur de vol.

6. Aéronef selon la revendication 4, **caractérisé par** des barres de liaison (15) se trouvant entre au moins deux moteurs (10) et le dispositif (16) pour la commande automatique de l'assiette ou de la hauteur de vol.

7. Aéronef selon la revendication 5 ou 6, **caractérisé par** un système GPS servant à rallier une position qui peut être prédéterminée.

8. Aéronef selon l'une quelconque des revendications 5 à 7, **caractérisé en ce que** le dispositif (16) est placé au-dessous du niveau auquel les barres de liaison (15) s'étendent entre les moteurs (10).

9. Aéronef selon l'une quelconque des revendications précédentes, **caractérisé en ce que** le moteur (10) et l'onduleur (14) forment une seule unité.

10. Aéronef selon l'une quelconque des revendications précédentes, **caractérisé en ce que** les barres de liaison (15) sont creuses et que des câbles (26) sont disposés à l'intérieur des barres.

11. Aéronef selon l'une quelconque des revendications précédentes, **caractérisé par** des éléments de jonction fixes mais amovibles entre les barres de liaison (15) et les moteurs (10).

12. Aéronef selon l'une quelconque des revendications précédentes, **caractérisé par** un accumulateur d'énergie placé sur l'aéronef.

13. Aéronef selon l'une quelconque des revendications précédentes, **caractérisé en ce que** l'aéronef présente un châssis constitué pour l'essentiel de barres de liaison.

14. Aéronef selon l'une quelconque des revendications précédentes, **caractérisé en ce que** les moteurs électriques sont reliés entre eux par des barres de liaison.

15. Aéronef selon l'une quelconque des revendications précédentes, **caractérisé en ce que** les rotors de sustentation sont pour l'essentiel des rotors à une pale ou à deux pales.
